# EUROPEAN PATENT APPLICATION

(11) **EP 2 772 663 A2**
(43) Date of publication of application: **03.09.2014**
(21) Application number: 14020008.0
(22) Date of filing: 22.01.2014
(51) Int. Cl.: F16H 1/32

(54) **Planetary gear speed reducer and method for manufacturing the same**

(30) Priority: 27.02.2013 JP 2013037837
(71) Applicant: SUMITOMO HEAVY INDUSTRIES, LTD., Tokyo 141-6025 (JP)
(72) Inventor: Tamenaga, Jun, Obu-shi, Aichi, 474-8501 (JP); Shizu, Yoshitaka, Obu-shi, Aichi, 474-8501 (JP); Abe, Shun, Obu-shi, Aichi, 474-8501 (JP); Shirouzu, Kenji, Yokosuka-shi, Kanagawa, 237-8555 (JP)
(74) Representative: Wimmer, Hubert

(57) **Abstract**

A planetary gear speed reducer and a method for manufacturing the same, which enable an output flange body and a main bearing to be more easily assembled to a casing, are obtained. A planetary gear speed reducer 10 equipped with an external gear (planetary gear) 14 includes a casing 50; an output flange body 34 arranged at an axial side portion of the external gear 14; and a main bearing 40 arranged between the casing 50 and the output flange body 34. The output flange body 34 includes a carrier body portion 34A located closer to the external gear 14 side than the main bearing 40. A snap ring 60 that restricts axial movement of the main bearing 40 is arranged between the main bearing 40 and the carrier body portion 34A of the output flange body 34 in the casing 50. The carrier body portion 34A of the output flange body 34 is provided with a recessed portion 64 (or hole) for allowing a jig that fits the snap ring 60 to be inserted therethrough.

## Description

### BACKGROUND OF THE INVENTION

### Field of the Invention

The present invention relates to a planetary gear speed reducer and a method for manufacturing the same.

Priority is claimed on Japanese Patent Application No. 2013-37837, filed on February 27, 2013, the entire content of which is incorporated herein by reference.

### Description of Related Art

A planetary gear speed reducer provided with a planetary gear is disclosed in Japanese Unexamined Patent Application Publication No. 2011-247364.

This planetary gear speed reducer has a casing, an output flange body arranged at an axial side portion of the planetary gear, and a main bearing arranged between the casing and the output flange body.

The output flange body includes a carrier body portion located closer to the planetary gear side than the main bearing. The output flange body receives the rotational component of the planetary gear with this carrier body portion and transmits the rotation component to the output shaft side.

In the planetary gear speed reducer having such a configuration, the main bearing is interposed between the casing and the output flange body, and the output flange body includes the carrier body portion located closer to the planetary gear side than the main bearing. Therefore, how easily this output flange body and the main bearing are assembled into the casing becomes a problem.

### SUMMARY OF THE INVENTION

The invention has been made in order to solve such a problem, and an object thereof is to provide a planetary gear speed reducer and a method for manufacturing the same which enable an output flange body and a main bearing to be more easily assembled to a casing.

The invention solves the above problems by providing a planetary gear speed reducer provided with a planetary gear, including: a casing; an output flange body arranged at an axial side portion of the planetary gear; and a main bearing arranged between the casing and the output flange body. The output flange body includes a carrier body portion located closer to the planetary gear side than the main bearing. A snap ring that restricts axial movement of the main bearing is arranged between the main bearing and the carrier body portion in the casing. The carrier body portion is provided with a recessed portion or hole for allowing a jig that fits the snap ring to be inserted therethrough.

According to the invention, the recessed portion or hole is provided in the carrier body portion of the output flange body. This recessed portion or hole is utilized when inserting a jig when fitting the snap ring that restricts the axial movement of the main bearing. For this reason, the snap ring of the main bearing can be more easily fitted.

The invention can also be understood as a method for manufacturing a planetary gear speed reducer provided with a casing, a planetary gear, an output flange body arranged at an axial side portion of the planetary gear, and a main bearing arranged between the casing and the output flange body. The manufacturing method includes assembling the main bearing into the output flange body; arranging a snap ring that restricts axial movement of the main bearing of the output flange body, on the planetary gear side of the main bearing; assembling the output flange body inside the casing in a state where the snap ring is arranged; and fixing the snap ring into a snap ring groove of the casing with a jig via a recessed portion or hole formed in the output flange body.

According to the invention, a planetary gear speed reducer and a method for manufacturing the same, which enable the output flange body and the main bearing to be more easily assembled to the casing, are obtained.

### BRIEF DESCRIPTION OF THE DRAWINGS

Fig. 1 is an overall cross-sectional view taken along line I-I of Fig. 3, showing a planetary gear speed reducer related to an embodiment of the invention.
Fig. 2 is an enlarged cross-sectional view of chief portions of Fig. 1.
Fig. 3 is a relationship diagram with a snap ring when a recessed portion in the planetary gear speed reducer of Fig. 1 is viewed from an axial direction.
Fig. 4 is an enlarged cross-sectional view of chief portions of Fig. 3.

### DETAILED DESCRIPTION OF THE INVENTION

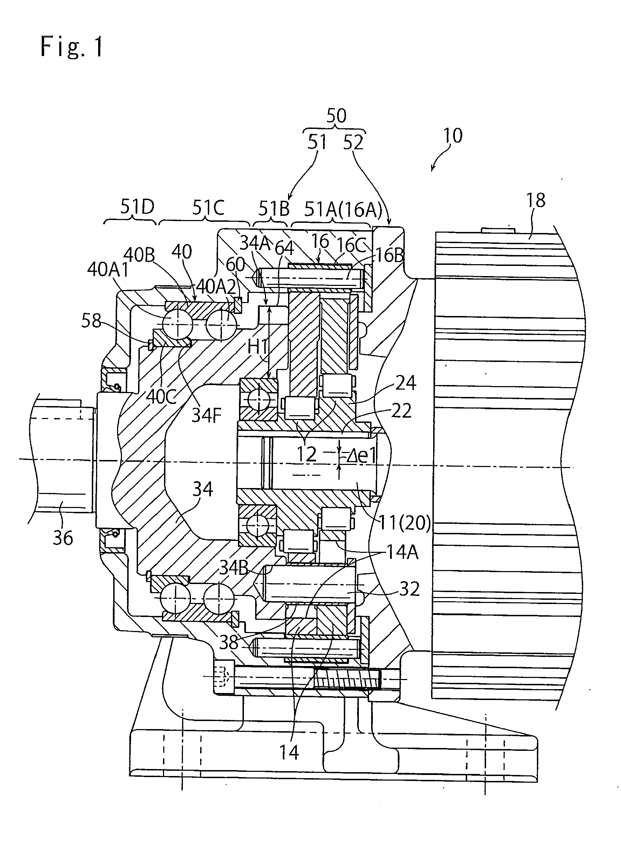

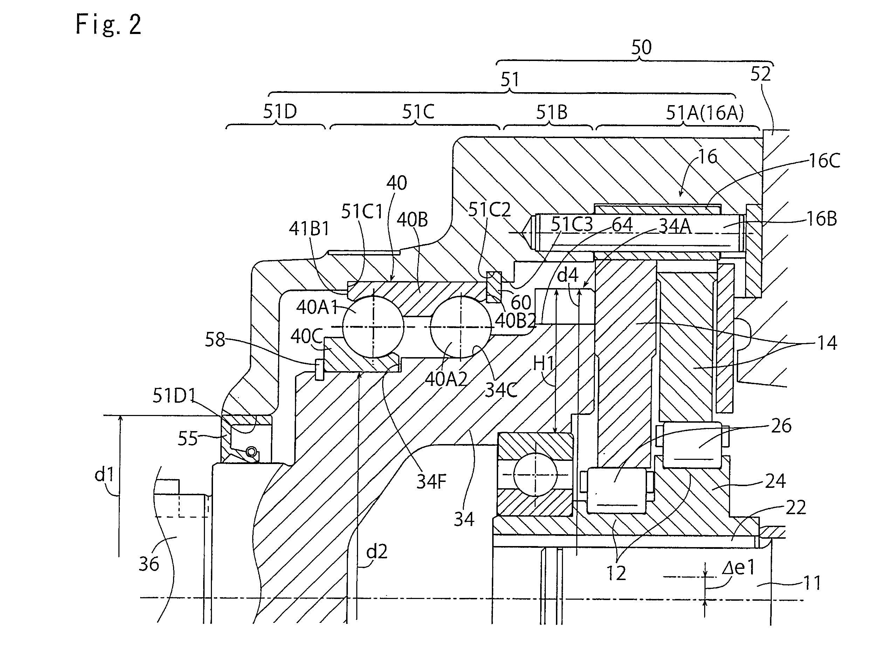

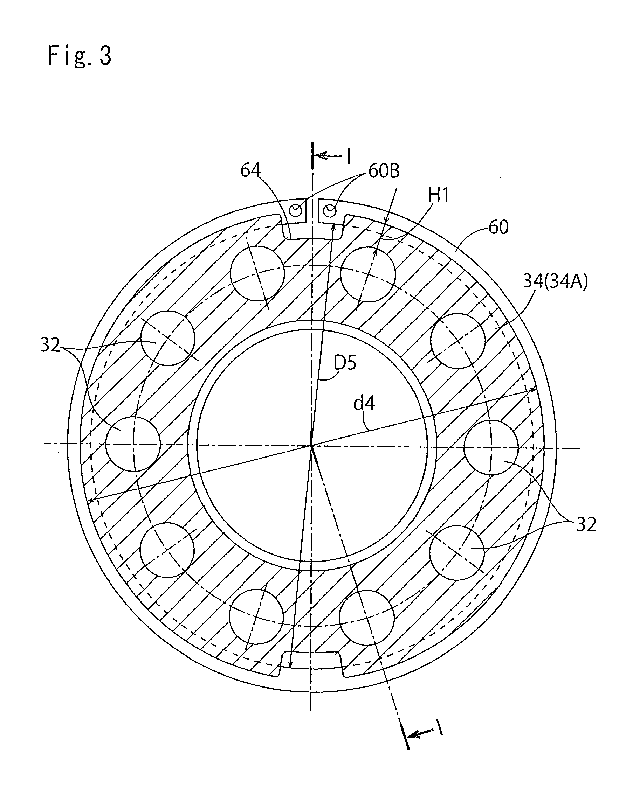

A planetary gear speed reducer related to an embodiment of the invention will be described below in detail with reference to the drawings. Fig. 1 is an overall cross-sectional view taken along line I-I of Fig. 3, showing the planetary gear speed reducer related to the embodiment of the invention and Fig. 2 is an enlarged cross-sectional view of chief portions of Fig. 1.

This planetary gear speed reducer 10 is an eccentric oscillation type planetary gear speed reducer referred to as a central crank type in which only one eccentric body shaft 24 is present at the center of an internal gear 16 in a radial direction. In the planetary gear speed reducer 10, two external gears (planetary gears) 14 are made to internally mesh with the internal gear 16 while being oscillated by two eccentric bodies 12, and the relative rotation produced between the internal gear 16 and the external gears 14 is taken out as output. The reason why the two external gears 14 are included in parallel is because ensuring of required transmission capacity and ensuring of rotation balance are intended.

An input shaft 11 of the planetary gear speed reducer 10 is integrated with a motor shaft 20 of a motor 18. The eccentric body shaft 24 is coupled to the input shaft 11 via a key 22. The two eccentric bodies 12 are formed integrally with the eccentric body shaft 24.

The external gears 14 are oscillatably assembled into outer peripheries of the eccentric bodies 12 via rollers 26. The external gears 14 internally mesh with the internal gear 16 while oscillating.

In this embodiment, the internal gear 16 is mainly constituted by an internal gear body 16A that is integrated with (a speed reduction portion housing portion 51A (to be described below) of) a casing 50, a columnar supporting pin 16B that is supported by the internal gear body 16A, and outer rollers 16C that are rotatably assembled into an outer periphery of the supporting pin 16B and constitute the internal teeth of the internal gear 16. The number of the internal teeth (the number of the outer rollers 16C) of the internal gear 16 is slightly (one in this embodiment) larger than the number of the external teeth of the external gears 14.

Each external gear 14 includes an inner pin hole 14A that passes through the external gear 14. Inner pins 32 are fitted into the inner pin hole 14A. Inner rollers 38 are arranged as sliding promotion members at outer peripheries of the inner pins 32 with a gap equivalent to twice the eccentricity Δe1 of the inner pin hole 14A and the eccentric body 12. An output flange body 34 is arranged at an axial side portion of the external gear 14. Additionally, a main bearing 40 is arranged between (a bearing housing portion 51C (to be described below) of) the casing 50 and the output flange body 34, and the output flange body 34 is rotatably supported by the casing 50 via the main bearing 40. Inner pins 32 are press-fitted into and fixed to an inner pin retaining hole 34B of a carrier body portion 34A of the output flange body 34. The output flange body 34 is integrated with an output shaft 36.

As the main bearing 40, in this embodiment, there is adopted a main bearing in which two rows of angular ball pairs 40A1 and 40A2 are integrated back to back within a single outer ring 40B so as to be able to support loads in both the radial direction and a thrust direction.

An inner ring 40C of the main bearing 40 is provided only at one row of angular balls 40A1. An independent inner ring is not provided at the other row of angular balls 40A2, but an outer peripheral portion 34C of the output flange body 34 serves also as the inner ring. In addition, the axial movement of the inner ring 40C is restricted by a snap ring 58 that is fitted into the output flange body 34, and a step portion 34F that is formed between the one row of angular balls 40A1 and the other row of angular balls 40A2 of the output flange body 34.

The output flange body 34 and the main bearing 40 are integrated as "a shim-adjusted single assembly" in advance (that is, by pinching the inner ring 40C of the main bearing 40 between the snap ring 58 and the step portion 34F using a proper shim (not shown) before the output flange body 34 is assembled into the casing 50).

The casing 50 of the planetary gear speed reducer 10 is constituted by a casing body 51 and a joint cover 52. The joint cover 52 serves also as a cover of the motor 18, and is coupled to an axial end portion of the casing body 51 of the casing 50.

On the other hand, the casing body 51 related to this embodiment integrally has a speed reduction portion housing portion 51A, a carrier body portion housing portion 51B that houses the carrier body portion 34A of and the output flange body 34, a bearing housing portion (first portion) 51C in which the main bearing 40 is arranged, and an oil seal housing portion (second portion) 51D that is located further toward an output side than the bearing housing portion 51C and has an oil seal 55 assembled thereinto from the motor 18 side (counter-output side). Here, the expression "integrally has" means a structure integrated as one member from the start. That is, a structure in which separate members are coupled together with a bolt or the like is not included.

In this embodiment, the casing 50 integrally has, particularly, the bearing housing portion (first portion) 51C in which the main bearing 40 is arranged, and the oil seal housing portion (second portion) 51D located closer to the output side than the bearing housing portion 51C. On the other hand, in this embodiment, in order to further improve sealing performance, the internal diameter of an opening 51D1 of the oil seal housing portion 51D is defined as d1, and is suppressed to be equal to less than the internal diameter d2 of the main bearing 40 (d1 < d2). Therefore, the output flange body 34 or the main bearing 40 has a structure capable of being assembled only from the counter-output side of the casing 50.

Moreover, in this embodiment, the inner pins (pin members) 32 as separate bodies that pass through the external gear 14 are fitted into the carrier body portion 34A of the output flange body 34. Specifically, as shown in Fig. 3, this embodiment includes ten inner pins 32 at intervals of 36 degrees in the circumferential direction. However, since the inner pins 32 are provided as bodies separate from the carrier body portion 34A, a large thickness H1 is secured on the radial outer side of each inner pin 32. As a result, the external diameter of the carrier body portion 34A of the output flange body 34 is d4.

On the other hand, (the bearing housing portion 51C of) the casing 50 integrally has a step portion 51C1 that restricts a output-side end face 40B1 of the outer ring 40B of the main bearing 40, at an inner periphery thereof. The step portion 51C1 is formed in a key shape with an internal diameter difference, and restricts the movement of the main bearing 40 to the axial output side of the outer ring 40B. Additionally, (the bearing housing portion 51C of) the casing 50 has a snap ring groove 51C2 for allowing a snap ring 60 that restricts a counter-output-side end face 40B2 of the outer ring 40B of the main bearing 40 to be fitted thereinto. The movement of the main bearing 40 to the axial counter-output side is restricted by the snap ring 60 fitted into the snap ring groove 51C2.

The snap ring 60 is constituted by a substantially ring-shaped elastic body. In the snap ring 60, a portion of the ring shape in the circumferential direction is cut out, and the spacing between end portions 60A and 60A is open by ΔL when free (when not being constricted by a jig). Holes 60B and 60B for a jig (jig operating portions) are formed in the vicinity of the end portions 60A and 60A, respectively, and projection portions of the jig (not shown) are inserted into the holes so that the spacing ΔL can be changed.

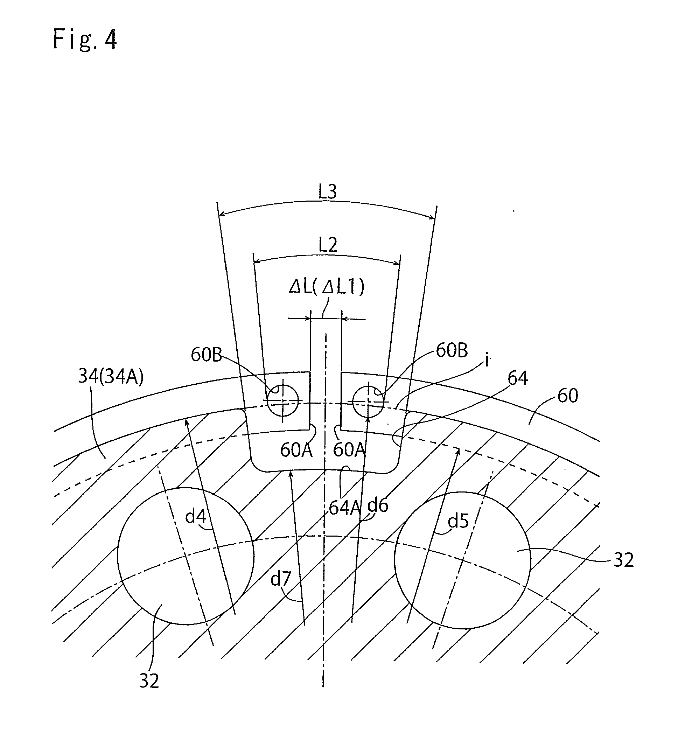

Specifically, when the snap ring 60 is assembled and when the snap ring 60 is located between the snap ring groove 51C2 and the carrier body portion 34A and rides over projection portion 51C3 of a side portion of the snap ring groove 51C2, the spacing ΔL between the holes 60B and 60B for a jig (jig operating portions) is narrowed to ΔL1 (state of Fig. 4). As a result, the snap ring 60 is brought into a state where the diameter is reduced to a required sufficient diameter, and is configured so as to be released from the reduced diameter at the portion of the snap ring groove 51C2 and thereby fitted into the snap ring groove 51C2. In addition, a state where the snap ring 60 is reduced in diameter, is located between the snap ring groove 51C2 and the carrier body portion 34A, and is reduced to a required sufficient diameter is hereinafter referred to as a "state of minimum diameter assembling". In this embodiment, since the external diameter d4 of the carrier body portion 34A of the output flange body 34 is equal to or more than the innermost diameter d6 (refer to an imaginary line i) of the holes 60B and 60B for a jig (jig operating portions) in the state of assembling minimum diameter (state of Fig. 4), there is provided a structure in which the fitting of the snap ring 60 is not allowed.

Thus, the carrier body portion 34A of the output flange body 34 is provided with a recessed portion 64 for inserting a jig that fits the snap ring 60. Specifically, in this embodiment, the recessed portion 64 is formed in a substantially rectangular shape whose cross-section perpendicular to an axis has rounded corners, and a circumferential size L3 sufficiently larger than the maximum circumferential spacing L2 between the two holes 60B and 60B for a jig when the snap ring 60 is free is secured. Additionally, a bottom portion 64A is cut in to a diameter (d7) sufficiently smaller than the innermost diameter d6 of the holes 60B and 60B for a jig of the snap ring 60 in the state of assembling minimum diameter.

That is, the bottom portion has a size such that the holes 60B and 60B for a jig can be held by the jig without interfering with the carrier body portion 34A, and even in the state of assembling minimum diameter, the snap ring 60 can be constricted and reduced in diameter without interfering with the carrier body portion 34A.

As shown in Fig. 3, the recessed portion 64 is formed between the inner pins (pin member) 32 in the circumferential direction (circumferential center between the inner pins 32 in the illustrated example) in order to suppress degradation in strength caused by the formation thereof. Additionally, recessed portions 64 are preferably formed in at least two places in the circumferential direction as in this embodiment. In addition, when the recessed portions are formed in two places, priority should be given to forming the recessed portions between the inner pins 32 in the circumferential direction. For example, when the number of inner pins is odd, the recessed portions may not be necessarily located at positions of 180 degrees.

Next, the actions of the planetary gear speed reducer 10 will be described.

If the input shaft 11 of the planetary gear speed reducer 10 integrated with the motor shaft 20 is rotated by the rotation of the motor shaft 20 of the motor 18, the eccentric body shaft 24 coupled to the input shaft 11 via the key 22 rotates. If the eccentric body shaft 24 rotates, the eccentric bodies 12 formed integrally with the eccentric body shaft 24 rotate, and whenever the input shaft 11 makes one rotation, the external gears 14 make one oscillating rotation via the rollers 26. As a result, a phenomenon occurs in which the meshing positions between the external gears 14 and the internal gear 16 deviate sequentially, and the external gears 14 rotate (rotate on their own axis) relative to the internal gear 16 in a fixed state by a difference in the number of teeth from the internal gear 16, that is, by "one tooth". The rotation components are transmitted to the output flange body 34 arranged at the axial side portions of the external gears 14 via the inner pins 32 and the output shaft 36 integrated with the output flange body 34 rotates. As a result, speed reduction in a reduction ratio equivalent to (difference in the number of teeth between the internal gear 16 and the external gears 14: 1 in this embodiment) / (number of teeth of the external gears 14) can be realized.

Here, since the actions of the present embodiment have a relationship inseparable from and integral with the method for manufacturing the planetary gear speed reducer 10, the actions of the present embodiment will be described below while describing the manufacturing method.

First, the main bearing 40 is assembled into the output flange body 34 in advance. In this case, the main bearing and the output flange body are integrated as "a shim-adjusted single assembly" by pinching the inner ring 40C of the main bearing 40 between the snap ring 58 and the step portion 34F using a proper shim (not shown).

Then, the snap ring 60 that restricts the axial movement of the main bearing 40 is arranged on the external gear 14 side (between the main bearing 40 and the carrier body portion 34A) of the main bearing 40, of the output flange body 34 (into which the main bearing 40 is assembled). This "arrangement" may be sufficient simply by being arranged literally. That is, the snap ring 60 is not locked to, particularly, the output flange body 34 (and of course, is not locked to the casing 50, either) in this stage.

Thereafter, the output flange body 34 (into which the main bearing 40 is assembled) is assembled into the casing 50 from the counter-output side in a state where the snap ring 60 is arranged. If assembling proceeds, the arranged snap ring 60 abuts against the side portion of the projection portion 51C3 of the casing 50 in front of the snap ring groove 51C2. Therefore, a jig is inserted via the recessed portion 64 formed in the carrier body portion 34A of the output flange body 34, and the holes 60B and 60B for a jig of the snap ring 60 are held to reduce the diameter of the snap ring 60. Then, since the output flange body 34 can be further pushed in, the output flange body is pushed in until the output-side end face 40B1 of the outer ring 40B of the main bearing 40 abuts against the step portion 51C1, and here, the snap ring 60 is released from its reduced diameter. As a result, the snap ring 60 is fitted into the snap ring groove 51C2 of the casing 50. In the present embodiment, recessed portions 64 are formed in two places of the carrier body portion 34A in the circumferential direction. Therefore, the snap ring 60 can be pushed in by inserting a jig from one recessed portion 64 to hold the holes 60B and 60B for a jig and inserting a separate jig from one more recessed portion 64, and the snap ring 60 can be fitted into the snap ring groove 51C2 in a well-balanced manner. In addition, the oil seal 55 may be assembled into the output shaft 36 in advance, or may be assembled (from the output shaft 36) later.

According to the present embodiment, all the assembling of the output flange body 34 including the main bearing 40 can also be performed from the counter-output side of the casing 50.

Accordingly, since the assembling task can be performed from one direction, the assembling task is efficient. Additionally, since the fixing of the main bearing 40 is performed by the pinching of the step portion 51C1 and the snap ring 60, a technique that requires substantial time and effort, such as press-fitting, does not need to be used, and task is simple and has low cost.

Such an action can be realized under a configuration in which the casing 50 integrally has the bearing housing portion (first portion) 51C, in which the main bearing 40 is arranged, and the oil seal housing portion (second portion) 51D located closer to the output side than the bearing housing portion 51C. As the bearing housing portion 51C and the oil seal housing portion 51D are integrated, low cost, high rigidity of the casing 50, and an improvement in sealing performance can be achieved.

Additionally, since the shim adjustment of the main bearing 40 can be performed in an open environment in advance, it is easy to perform task and high shim adjustment precision can be ensured. Since the shim adjustment of the main bearing 40 is a very important task in order to maintain smooth rotation of the output shaft 36 and to prevent "chattering", the effect that this shim adjustment can be performed in an open environment is large.

While providing the snap ring 60 in which the innermost diameter d6 in the state of assembling minimum diameter is smaller than the external diameter d4 of the carrier body portion 34A, the snap ring 60 can be fitted on a forward side of the carrier body portion 34A in an insertion direction thereof by preliminary arrangement and insertion of a jig using the recessed portion 64. Therefore, the assembling of the output flange body 34 and the main bearing 40 can be easily completed with no difficulty, without making small the external diameter d4 of the carrier body portion 34A having an important meaning in terms of strength and without making the size of the main bearing 40 (that directly leads to high cost) larger than needed.

In addition, in this embodiment, the casing 50 integrally has the step portion 51C1 that restricts the output-side end face 40B1 of the outer ring 40B of the main bearing 40. Therefore, it is not necessary to arrange a snap ring for restricting the axial movement of the main bearing 40 to the output side, and the number of parts can be reduced as such. As for the configuration of "forming the step portion 51C1 in the casing 50", in the present embodiment, all tasks can be performed from one direction. Therefore, it is also possible to position the main bearing 40 which is most fundamental (not by locking having still uncertainty, such as the snap ring but) by the step portion 51C1 of the casing 50 that is more certain. However, the formation of the step portion is not indispensable to the invention, and using the snap ring or the like is not prohibited.

Additionally, when the invention has a configuration in which the casing integrally has the first portion in which the main bearing is arranged and the second portion located closer to the output side than the first portion and the internal diameter of the second portion is equal to or less than the internal diameter of the main bearing (when the output flange body is assembled only from a counter-load side), particularly effective effects can be obtained. However, the invention can be applied even if this condition is not satisfied, and can also be applied to, for example, a planetary gear speed reducer having a configuration in which the second portion is not integrated with the first portion, without difficulty. This is also the same in other portions of the casing, and whether any portions of the casing are integral (separate) does not particularly matter.

Similarly, in the invention, when the external diameter of the carrier body portion of the output flange body is equal to or more than the innermost diameter of the jig operatingportions when being located between the snap ring groove of the snap ring and the carrier body portion when the snap ring is assembled (when the condition that mounting of the snap ring is not allowed is satisfied due to the presence of the carrier body portion), the most effective effect can be obtained. However, the invention can be applied even if this condition is not satisfied, and the effect that mounting of the snap ring becomes easier due to the presence of the recessed portion can be obtained.

Additionally, in the invention, when the pin members as separate bodies that pass through a planetary gear are fitted into the carrier body portion of the output flange body, an effective effect can be obtained (particularly, since the external diameter of the carrier body portion becomes large easily). However, the invention can also be applied to a case where the pin members are integrated with the carrier body portion.

Additionally, in the above embodiment, recessed portions are formed in two places in the circumferential direction. However, the two recessed portions may not be necessarily provided. For example, only one recessed portion or three or more recessed portions may be provided.

Additionally, in the above embodiment, the shape of the recessed portion is formed in a rectangular shape whose corners are rounded. However, the shape of the recessed portion is not limitedtothis. For example, a semicircular or U-shaped recessed portion may be adopted. When the thickness of the carrier body portion outside the pin members is large, not the "recessed portion" cut in from the outer periphery but a "hole" in which the outer peripheral portion is left behind may be adopted.

Additionally, in the above embodiment, as the main bearing, there is adopted a main bearing in which two rows of angular ball pairs are integrated back to back within the single outer ring so as to be able to support loads in both the radial direction and the thrust direction. However, as configuration having the same function, for example, a cross roller bearing or the like may be adopted as the main bearing.

Additionally, the speed reducer including the eccentric oscillation type speed-reducing mechanism referred to as the central crank type in which only one eccentric body shaft is present at the center of the internal gear in the radial direction is shown in the above embodiment. However, as the speed-reducing mechanism of this type of speed reducer, there is also known a speed-reducing mechanism referred to as a so-called distribution type that has a plurality of eccentric body shafts at positions offset from the axial center of the internal gear, and synchronously rotates eccentric bodies provided in the plurality of eccentric body shafts so as to oscillate external gears. The invention can also completely similarly applied to the distribution type and eccentric oscillation type planetary gear speed reducer or the like. Moreover, the invention can also be applied to a simple planetary gear speed reducer.

## Claims

1. A planetary gear speed reducer provided with a planetary gear, comprising:
a casing;
an output flange body arranged at an axial side portion of the planetary gear; and
a main bearing arranged between the casing and the output flange body,
wherein the output flange body includes a carrier body portion located closer to the planetary gear side than the main bearing,
wherein a snap ring that restricts axial movement of the main bearing is arranged between the main bearing and the carrier body portion in the casing, and
wherein the carrier body portion is provided with a recessed portion or hole for allowing a jig that fits the snap ring to be inserted therethrough.

2. The planetary gear speed reducer according to Claim 1,
wherein the casing integrally has a step portion that restricts an output-side end face of an outer ring of the main bearing.

3. The planetary gear speed reducer according to Claim 1 or 2,
wherein the casing integrally has a first portion in which the main bearing is arranged, and a second portion located closer to the output side than the first portion, and
wherein the internal diameter of an opening of the second portion is equal to or less than the internal diameter of the main bearing.

4. The planetary gear speed reducer according to any one of Claims 1 to 3,
wherein the external diameter of the carrier body portion of the output flange body is equal to or more than the innermost diameter of a jig operating portion when the snap ring is located between a snap ring groove of the snap ring and the carrier body portion.

5. The planetary gear speed reducer according to any one of Claims 1 to 4,
wherein a pin member as a separate body that passes through the planetary gear is fitted into the carrier body portion of the output flange body.

6. The planetary gear speed reducer according to any one of Claims 1 to 5,
wherein at least two recessed portions or holes are provided in a circumferential direction.

7. A method for manufacturing a planetary gear speed reducer provided with a casing, a planetary gear, an output flange body arranged at an axial side portion of the planetary gear, and a main bearing arranged between the casing and the output flange body, the manufacturing method comprising:
assembling the main bearing into the output flange body;
arranging a snap ring that restricts axial movement of the main bearing, on the planetary gear side of the main bearing, of the output flange body;
assembling the output flange body inside the casing in a state where the snap ring is arranged; and
fixing the snap ring into a snap ring groove of the casing with a jig via a recessed portion or hole formed in the output flange body.
